# EUROPEAN PATENT APPLICATION

(11) **EP 4 449 945 A1**
(43) Date of publication of application: **23.10.2024**
(21) Application number: 24162917.9
(22) Date of filing: 12.03.2024
(51) Int. Cl.: A45F 5/00, A45F 5/10

(54) **WEARABLE AND ROTATABLE METHODS, SYSTEMS, AND APPARATUSES FOR MOUNTABLE DEVICES**

(30) Priority: 19.04.2023 CN 202310424047
(71) Applicant: Hand Held Products, Inc., Charlotte, NC 28202 (US)
(72) Inventor: ZHANG, Yinlei, Charlotte, 28202 (US); DU, Haibin, Charlotte, 28202 (US); QU, Tiecheng, Charlotte, 28202 (US); SONG, Xiaoyan, Charlotte, 28202 (US); LI, Mengshan, Charlotte, 28202 (US)
(74) Representative: Haseltine Lake Kempner LLP

(57) **Abstract**

Methods, apparatuses, systems, devices, and/or the like are provided. In some embodiments, a wearable apparatus may include a mounting plate configured to be operably engaged with a mountable device; a strap operably attached to the mounting plate and configured to be operably engaged with a user; and a connecting axis configured to operably engage the mounting plate and the strap, wherein the connecting axis is configured to rotate relative to one of the mounting plate or the strap while refraining from rotating relative to the other of the mounting plate or the strap.

## Description

### TECHNICAL FIELD

**.** The present disclosure relates generally to wearable apparatuses for securing mounting devices. In particular, it relates to a wearable and rotatable strap configured to secure a mountable device to a person.

### BACKGROUND

**.** In modern production environments, such as warehouses and industrial locations, it is desirable for human operators to be able to wear mountable device for easy access. This is also desirable for other jobs, such as parcel delivery.

**.** Mountable devices (e.g., a tablet) often require a simple and intuitive way of latching on to the wrist, hand, or forearm of a user. The mountable device may be attached to a wearable apparatus (such as a strap), which may then be worn by a user to enable easy and efficient access to the mountable device.

**.** At various points during the workday, a user may need to remove or otherwise disengage the mountable device from the wearable apparatus. For example, to replace the battery, or to perform other maintenance on the wearable device, which may result in a delay in production time.

**.** Variations in wrist, hand, and forearm sizes between users may require the purchase of multiple wearable apparatuses of different sizes and orientations, leading to additional expenses. Further, wearable mounting apparatus in certain orientation may not work for all users; that is, users with larger hands may not be able to effectively use a wearable mounting apparatus if the strap is oriented such that their fingers cannot easily reach buttons or other components of the mountable device.

**.** Through applied effort, ingenuity, and innovation, Applicant has solved problems relating to wearable hand straps by developing solutions embodied in the present disclosure, which are described in detail below.

### SUMMARY

**.** In general, embodiments of the present disclosure provide methods, systems, and apparatuses for wearing and rotating a mountable device and/or the like.

**.** In accordance with various embodiments of the present disclosure there is provided a wearable apparatus including a mounting plate configured to be operably engaged with a mountable device; a strap operably attached to the mounting plate and configured to be operably engaged with a user; and a connecting axis configured to operably engage the mounting plate and the strap, wherein the connecting axis is configured to rotate relative to one of the mounting plate or the strap while refraining from rotating relative to the other of the mounting plate or the strap.

**.** In some embodiments, the mounting plate defines one or more first attachment portions and one or more second attachment portions, and wherein the mounting plate is configured to operably engage with the mountable device such that the first attachment portions are disposed on an upper portion of the mountable device and the second attachment portions are disposed on a bottom portion of the mountable device.

**.** In some embodiments, the wearable apparatus includes one or more adjustment devices configured to adjust a length of one or more of the first attachment portions of the second attachment portions when the mounting plate is operably engaged with the mountable device.

**.** In some embodiments, the wearable apparatus includes the mountable device, wherein the mountable device comprises a button configured to actuate one or more functions of the mountable device.

**.** In some embodiments, the mountable device is a tablet.

**.** In some embodiments, the connecting axis is a magnetized connecting axis configured to attach via magnetism to one or more of the strap or the mounting plate.

**.** In some embodiments, the wearable apparatus includes an intermediary portion operably connected to the mounting plate or the strap and configured to be disposed between the mounting plate and the strap.

**.** In some embodiments, the intermediary portion includes two or more layers, and wherein the connecting axis is configured to be disposed through one or more holes in the two or more layers of the intermediary portion.

**.** In some embodiments, the wearable apparatus includes a holder disposed on the strap and configured to hold a stylus.

**.** In accordance with various embodiments of the present disclosure there is provided a wearable system including: a mountable device comprising one or more mounting portions; a mounting plate configured to be operably engaged with the mountable device at the one or more mounting portions; a strap operably attached to the mounting plate and configured to be operably engaged with a user; and a connecting axis configured to operably engage the mounting plate and the strap, wherein the connecting axis is configured to rotate relative to one of the mounting plate or the strap while refraining from rotating relative to the other of the mounting plate or the strap.

**.** In some embodiments, the mounting plate defines one or more first attachment portions and one or more second attachment portions, and wherein the mounting plate is configured to operably engage with the mountable device such that the first attachment portions are disposed on an upper portion of the mountable device and the second attachment portions are disposed on a bottom portion of the mountable device.

**.** In some embodiments, the wearable system includes one or more adjustment devices configured to adjust a length of one or more of the first attachment portions of the second attachment portions when the mounting plate is operably engaged with the mountable device.

. In some embodiments, the mountable device is a tablet.

. In some embodiments, the wearable system further includes a sleeve configured to encase at least a portion of the mountable device.

. In some embodiments, the connecting axis includes a magnetized connecting axis configured to attach via magnetism to one or more of the strap or the mounting plate.

. In some embodiments, the wearable system further includes an intermediary portion operably connected to the mounting plate or the strap and configured to be disposed between the mounting plate and the strap.

. In some embodiments, the intermediary portion includes two or more layers, and wherein the connecting axis is configured to be disposed through one or more holes in the two or more layers of the intermediary portion.

. In accordance with various embodiments of the present disclosure there is provided a method of using a wearable system, the method including: attaching, via one or more fastening devices, a mounting plate to a mountable device, wherein the mounting plate defines one or more first attachment portions and one or more second attachment portions, and wherein the mounting plate is configured to operably engage with the mountable device such that the first attachment portions are disposed on an upper portion of the mountable device and the second attachment portions are disposed on a bottom portion of the mountable device; attaching, via a central connecting axis, a strap to the mounting plate; and rotating, via the central connecting axis, the strap relative to the mounting plate or the mounting plate relative to the strap.

. In some embodiments, the method further includes detaching, via the one or more fastening devices, the mounting plate from the mountable device.

. In some embodiments, the method further includes removing a back cover of the mountable device and replacing a battery of the mountable device.

. The above summary is provided merely for purposes of summarizing some example embodiments to provide a basic understanding of some embodiments of the disclosure. Accordingly, it will be appreciated that the above-described embodiments are merely examples. It will be appreciated that the scope of the disclosure encompasses many potential embodiments in addition to those here summarized, some of which will be further described below.

### BRIEF DESCRIPTION OF THE SEVERAL VIEWS OF THE DRAWING(S)

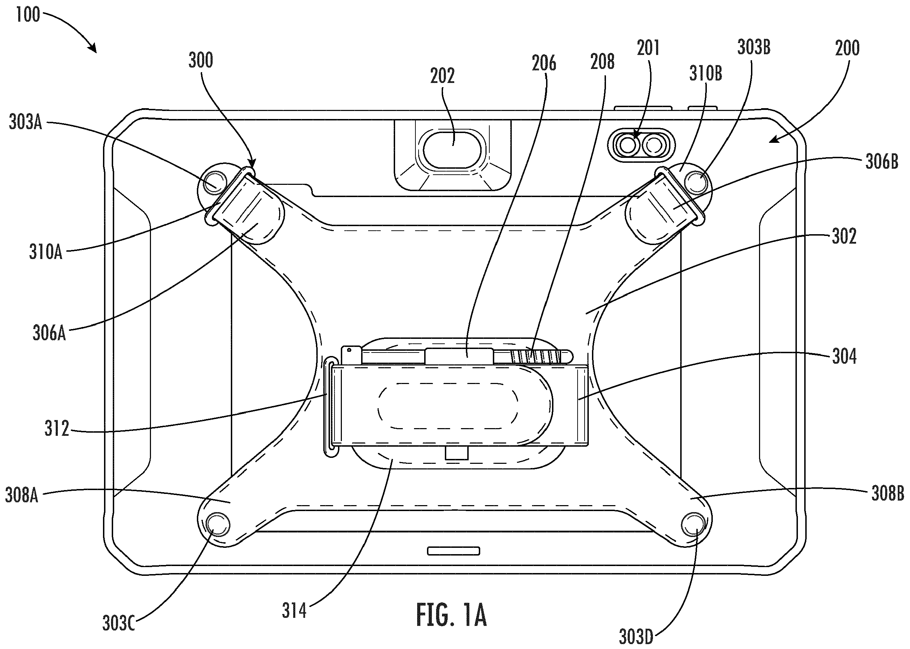

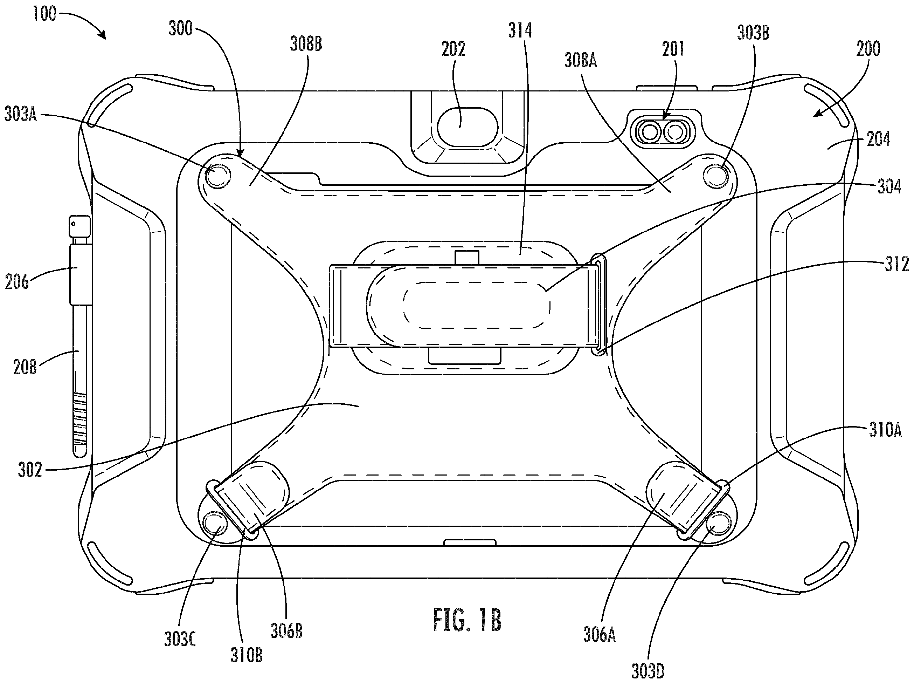

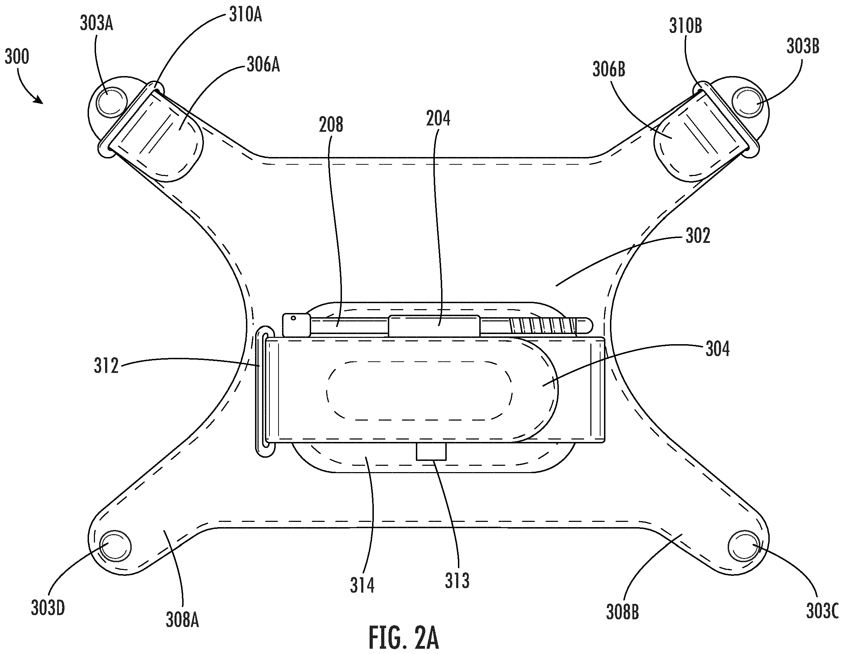

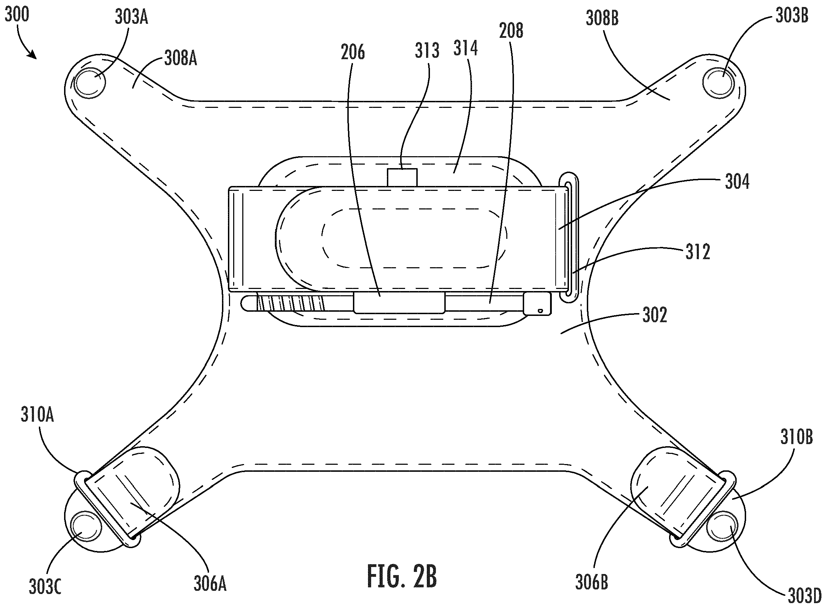

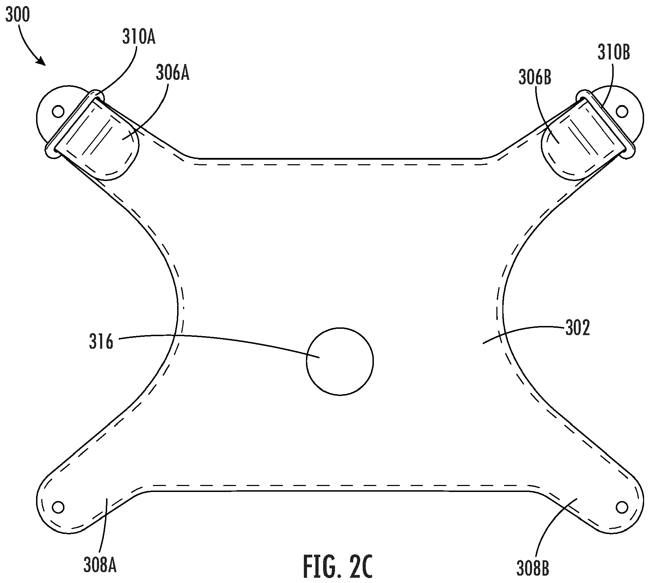

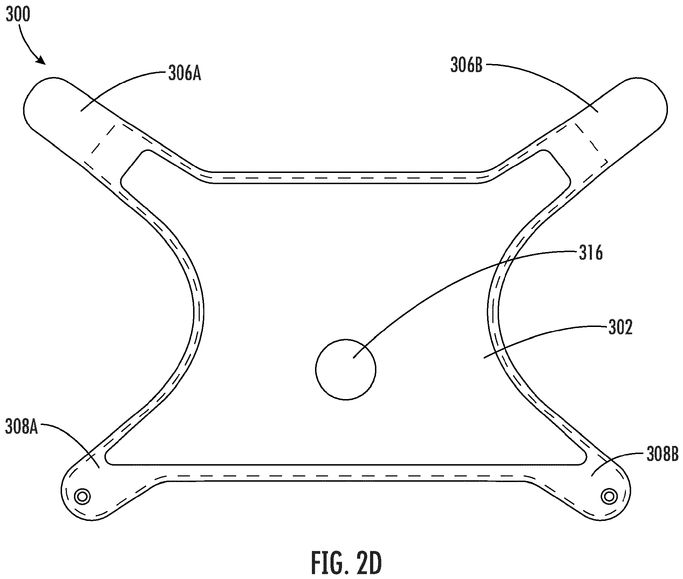

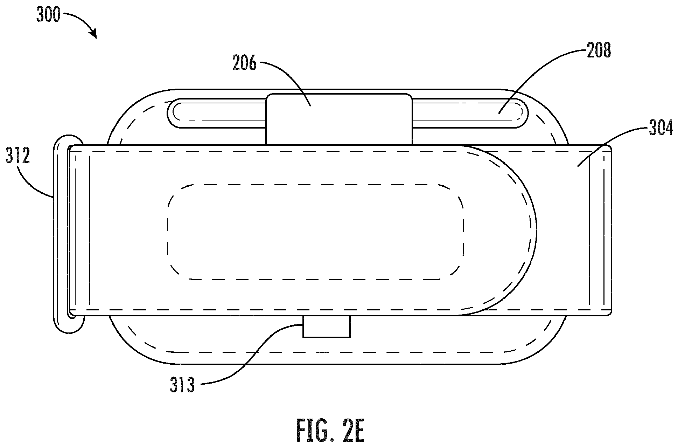

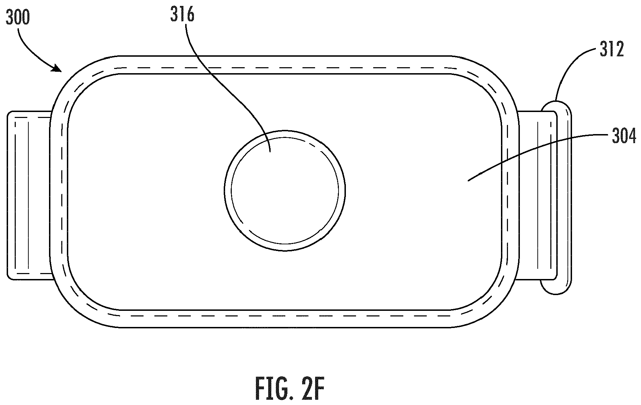

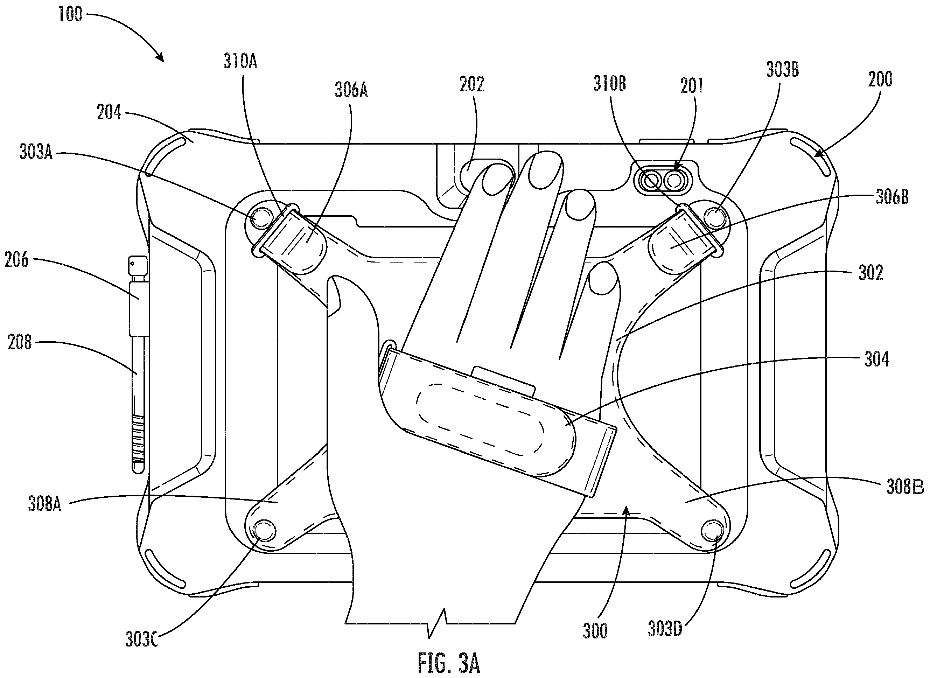

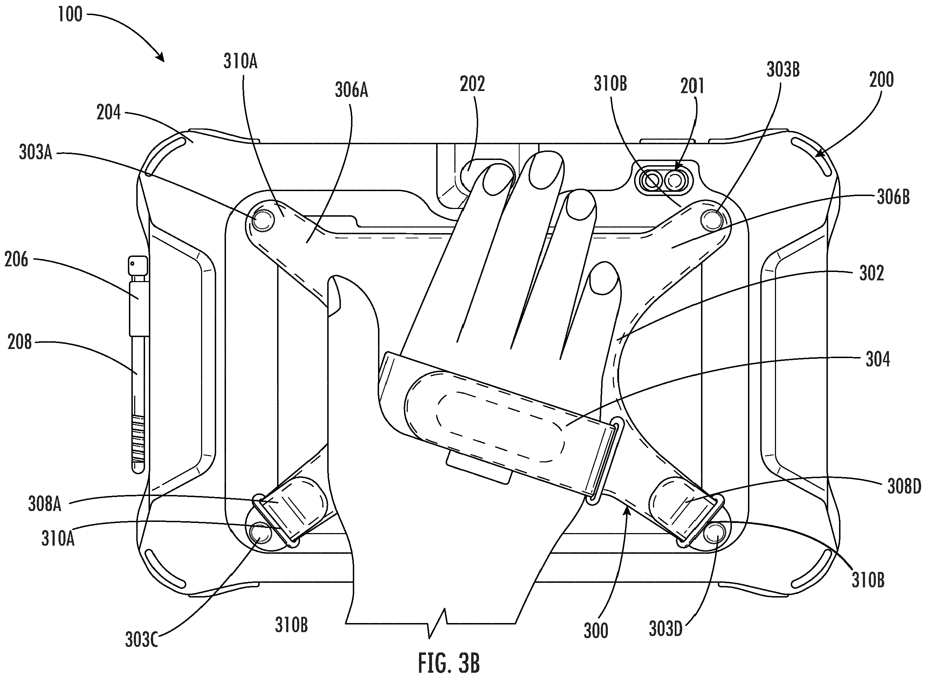

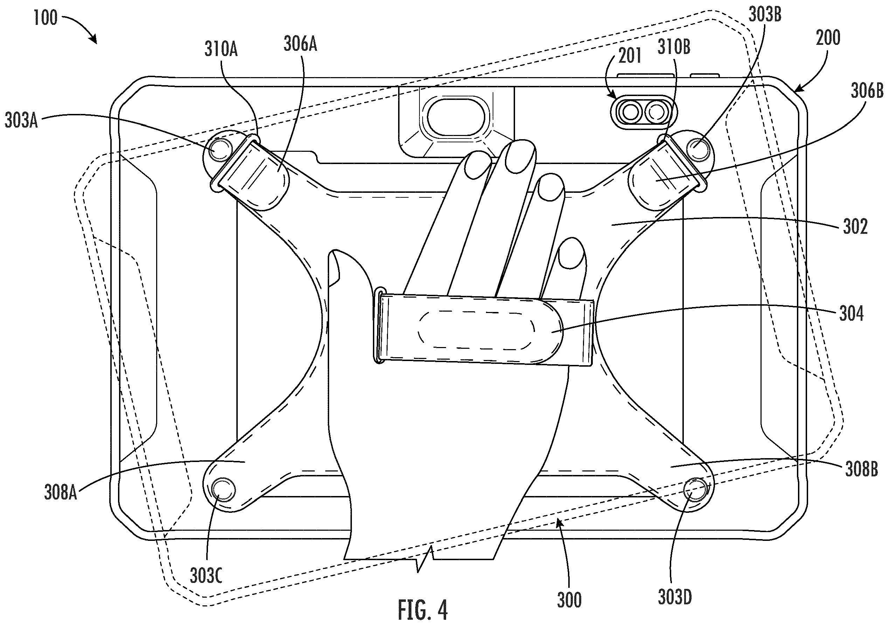

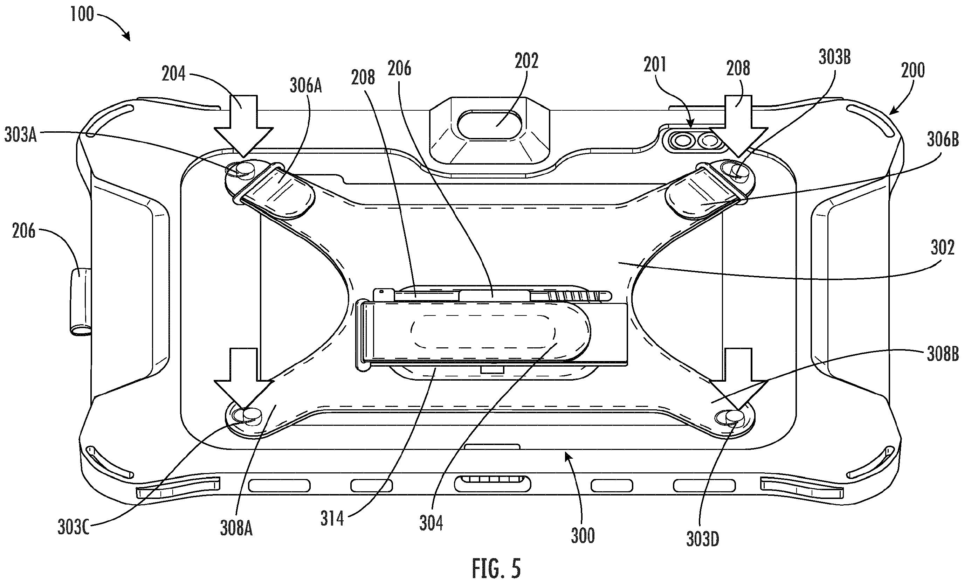

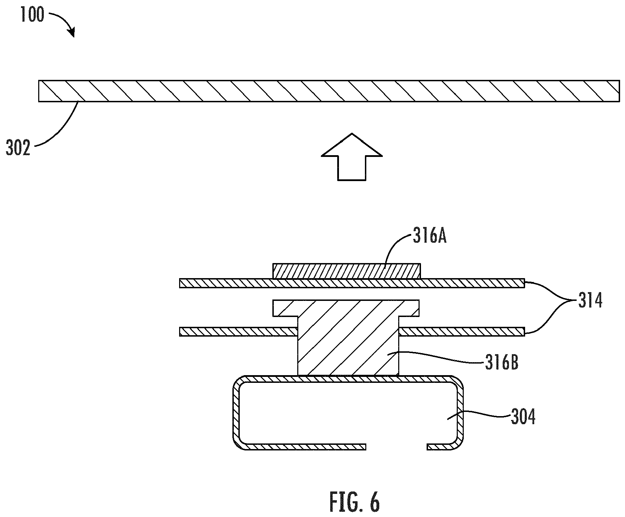

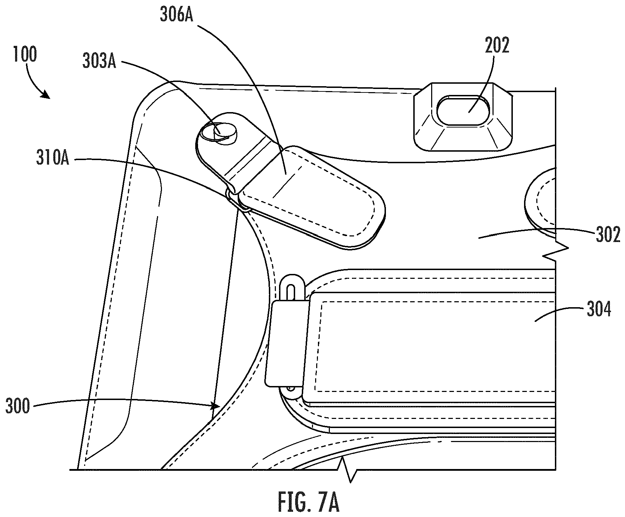

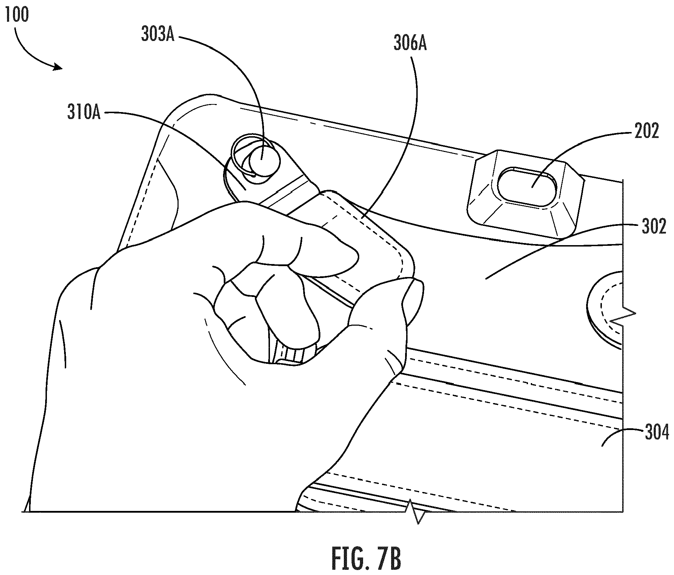

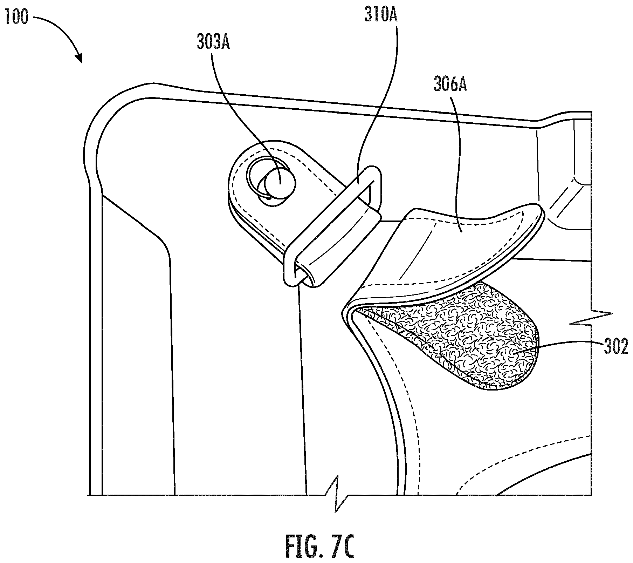

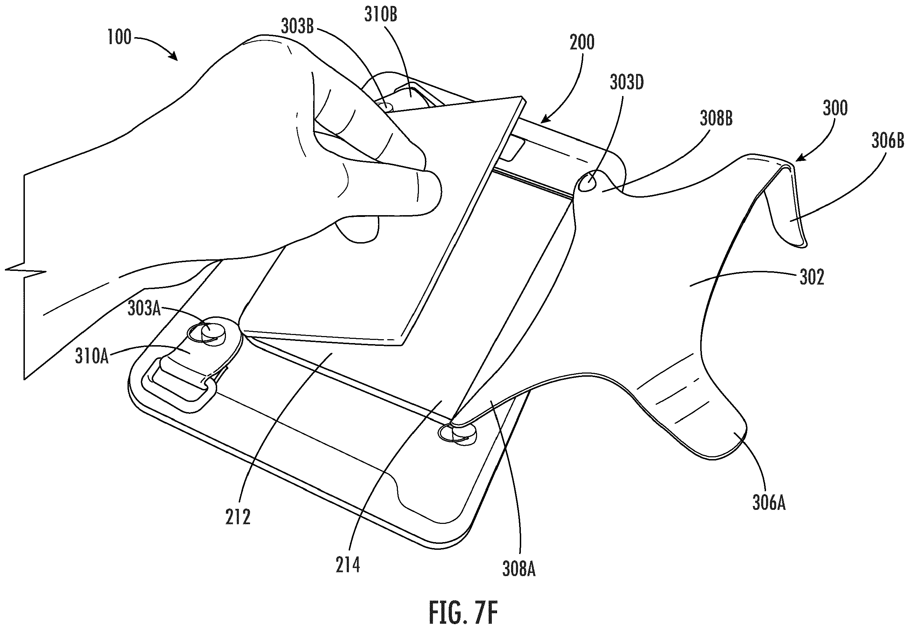

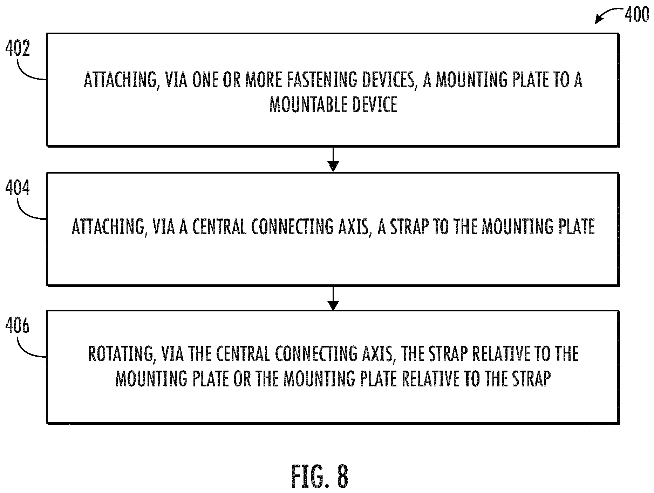

. Having thus described the disclosure in general terms, reference will now be made to the accompanying drawings, which are not necessarily drawn to scale, and wherein:
. FIG. 1A is a top plan view of an example wearable system in a first orientation in accordance with various embodiments of the present disclosure;
. FIG. 1B is a top plan view of an example wearable system in a second orientation in accordance with various embodiments of the present disclosure;
. FIG. 2A is a top plan view of an example wearable mounting apparatus in a first orientation in accordance with various embodiments of the present disclosure;
. FIG. 2B is a top plan view of an example wearable mounting apparatus in a second orientation in accordance with various embodiments of the present disclosure;
. FIG. 2C shows an additional view of an example wearable mounting apparatus in accordance with various embodiments of the present disclosure;
. FIG. 2D shows an additional view of an example wearable mounting apparatus in accordance with various embodiments of the present disclosure;
. FIG. 2E shows an additional view of an example wearable mounting apparatus in accordance with various embodiments of the present disclosure;
**.** FIG. 2F shows an additional view of an example wearable mounting apparatus in accordance with various embodiments of the present disclosure;
. FIG. 3A is a top plan view of an example wearable system attached to a user in a first orientation in accordance with various embodiments of the present disclosure;
. FIG. 3B is a top plan view of an example wearable system attached to a user in a second orientation in accordance with various embodiments of the present disclosure;
. FIG. 4 is a top plan view of an example wearable system attached to a user illustrating a rotation of the system in accordance with various embodiments of the present disclosure;
. FIG. 5 is an angled top view of an example wearable system in accordance with various embodiments of the present disclosure;
. FIG. 6 is an elevated side view of an example wearable mounting apparatus in accordance with various embodiments of the present disclosure;
. FIGS. 7A-7F are angled top views of an example wearable system illustrating battery replacement steps in accordance with various embodiments of the present disclosure; and
. FIG. 8 is a flow chart illustrating an example method of use for an example wearable system in accordance with various embodiments of the present disclosure.

### DETAILED DESCRIPTION OF SOME EXAMPLE EMBODIMENTS

. Various embodiments of the present disclosure now will be described more fully hereinafter with reference to the accompanying drawings, in which some, but not all embodiments of the disclosure are shown. Indeed, this disclosure may be embodied in many different forms and should not be construed as limited to the embodiments set forth herein; rather, these embodiments are provided so that this disclosure will satisfy applicable legal requirements. The term "or" (also designated as "/") is used herein in both the alternative and conjunctive sense, unless otherwise indicated. The terms "illustrative" and "exemplary" are used to be examples with no indication of quality level. Like numbers may refer to like elements throughout. The phrases "in one embodiment," "according to one embodiment," and/or the like generally mean that the particular feature, structure, or characteristic following the phrase may be included in at least one embodiment of the present disclosure and may be included in more than one embodiment of the present disclosure (importantly, such phrases do not necessarily may refer to the same embodiment).

### Overview

**.** Many individuals employed in a variety of occupations may be required to attach and un-attach mountable devices to a wearable apparatus multiple times throughout the workday. Typical examples include workers in warehouses and other industrial centers. However, a similar requirement may apply to parcel deliverers. It will be understood that many other workers and professionals may have such requirements.

**.** In some embodiments, a wearable system may include a mountable device (e.g., a tablet) and a wearable apparatus. In some embodiments, the wearable apparatus may include a mounting plate configured to be attached to the mountable device. In some embodiments, the mounting plate may be reversible or otherwise configured to attach to the wearable apparatus in a variety of ways. For example, in some embodiments, the mounting plate may be asymmetrical and have asymmetrical attachment points, thereby enabling the mounting plate to be attached to the wearable device in more than one way.

**.** In some embodiments, the wearable apparatus may include a strap configured to be attached to the mounting plate, as well as being attached to a user's hand, wrist, or forearm. In some embodiments, the strap may be attached to the mounting plate via a central axis member. In some embodiments, the central axis member may be configured to rotate the mounting plate relative to the strap to two or more discrete positions. By extension, in some embodiments, this may enable a user to rotate the wearable device in their hand to two or more discrete positions (e.g., a "portrait" position and a "landscape" position).

### Example Wearable Systems

**.** FIGS. 1A and 2A show top plan views of an example wearable system 100, according to various embodiments. In some embodiments, the wearable system 100 may include a mountable device 200 and a wearable apparatus 300. In some embodiments, the wearable system 100 may be configured to secure the mountable device 200 to the wearable apparatus 300, such that a user can secure the wearable apparatus 300 while attached to the mountable device 200. In at least this way, according to some embodiments, the wearable system 100 may enable a user to wear the mountable device 200 using the wearable apparatus 300 and thereby access features of the mountable device 200 while keeping his or her hands free. Further, the wearable apparatus 300 may enable the user to rotate or otherwise orient the mountable device 200 as desired.

**.** Still referring to FIGS. 1A and 2A, in some embodiments, the mountable device 200 may include a button 202. In some embodiments, the button 202 may be configured to actuate/execute one or more functions of the mountable device 200. In some embodiments, the mountable device 200 may include an imaging device 201. In some embodiments, the imaging device 201 may be a camera and a flash, and the button 202 may be configured to take a snapshot using imaging device 201. In some embodiments, the button 202 may be configured to activate a scanner function of the mountable device 200 to scan one or more bar codes or QR codes. In some embodiments, the button 202 may be positioned on the mountable device 200 such that the button 202 may be accessed by an index finger or other digit of the user when the wearable system 100 is worn by the user.

**.** In some embodiments, the mountable device 200 may include a sleeve 204. In some embodiments, the sleeve 204 may be a rubber sleeve configured to provide protection for the mountable device 200 against falls or other physical trauma. According to various embodiments, the wearable system 100 may function with a mountable device 200 having a sleeve 204 (as in FIG. 1B) and without a sleeve 204 (as in FIG. 1A).

**.** In some embodiments, the sleeve 204 may include a holder 206 configured for holding a stylus 208 or similar implement for interacting with the mounting device 200. In some embodiments, the holder 206 may be positioned on the wearable apparatus 300 instead of the mountable device 200 while retaining the same functionality. In some embodiments, the wearable system 100 may include multiple holders 206 for one or more styluses 208.

**.** In some embodiments, the wearable system 100 may have multiple orientations. A first orientation is shown in FIG. 1A and a second orientation is shown in FIG. 1B, according to various embodiments. In some embodiments, a user may toggle the wearable system 100 between different orientations by reorienting the wearable apparatus 300 relative to the mountable device 200.

**.** Referring now to FIGS. 2A-F, top plan views of the wearable apparatus 300 are shown, according to various embodiments. In some embodiments, the wearable apparatus 300 may include a mounting plate 302. In some embodiments, the mountable device 200 may be configured to be mounted to the mounting plate 302. In some embodiments, the mounting plate 302 may be a polygonal, substantially X-shaped sheet. In some embodiments, the mounting plate 302 may be composed of metal or other "hard" and substantially rigid material. In some embodiments, the mounting plate 302 may be contained in a sleeve, such as a rubber sleeve or other "soft" material configured for comfortable human interaction.

**.** Still referring to FIGS. 2A-F, in some embodiments, the mounting plate 302 may be symmetrical. In some embodiments, the mounting plate 302 may be asymmetrical and include one or more first attachment portions 306A and 306B and one or more second attachment portions 308A and 308B. In some embodiments, the first and second attachment portions 306A-B and 308A-B may be a part of /integrated with the mounting plate 302. In some embodiments, the first and second attachment portions 306A-B and 308A-B may be attached separately to the mounting plate 302 (e.g., via stitching or one or more fasteners). In some embodiments, the first attachment portions 306A and 306B may be the same length as the second attachment portions 308A and 308B. In some embodiments, the first attachment portions 306A and 306B may be longer than the second attachment portions 308A and 308B, or *vice-versa.*

**.** In some embodiments, the mounting plate 302 may be operably attached to the mountable device 200 by a plurality of fastening devices 303A-D, which may attach to one or more mounting locations on the mountable device 200. In some embodiments, the plurality of fastening devices 303A-D may be disposed through a plurality of holes on the mounting plate 302 and the mountable device 200 that are aligned. In some embodiments, the plurality of fastening devices 303A-D may be installed by hand without the need for tools or additional materials. In some embodiments, the plurality of fastening devices 303A-D may be D-ring thumb screws. Installation of the fastening devices 303A-D is indicated by the arrows shown in at least FIG. 5, according to some embodiments.

**.** In some embodiments, the first attachment portions 306A and 306B may be operably engaged with one or more adjustment devices 310A and 310B. In some embodiments, the first attachment portions 306A and 306B may be looped into or otherwise operably engaged with the one or more adjustment devices 310A and 310B by a hook-and-loop system (e.g., Velcro). In some embodiments, the one or more adjustment devices 310A and 310B may be used to adjust the length of the first attachment portions 306A and 306B. For example, the first attachment portion 306A may be pulled through the adjustment device 310A, folded back on itself, and then securely attached (e.g., via a hook-and-loop system such as Velcro) such that the first attachment portion 306A is functionally identical in length to the second attachment portions 308A and 308B. In some embodiments, in at least this way, the orientation of the mounting plate 302 may be varied, and the mounting plate 302 may be varied between symmetrical and asymmetrical variations.

**.** Returning to FIGS. 1A and 1B, but also referring to FIGS. 2A and 2B as well as FIGS. 3A and 3B, in some embodiments, the mounting plate 302 may be reversed. In some embodiments, such as in at least FIGS. 1A and 2A, the first attachment portions 306A and 306B may be attached to the "top" of the mountable device 200. In some embodiments, such as in at least FIGS. 1B and 2B, the first attachment portions 306A and 306B may be attached to the "bottom" of the mountable device 200.

**.** In some embodiments, and as shown in FIGS. 3A and 3B, reversing the orientation of the mounting plate 302 may enable users with differently-sized hands to efficiently and effectively use the wearable system 100. For example, as shown in FIG. 3A, the first attachment portions 306A and 306B are disposed on the "top" of the wearable system 100 for a user with larger hands, while in FIG. 3B the first attachment portions 306C and 306D are disposed on the "bottom" of the wearable system 100 for a user with smaller hands. It will be understood that, by changing orientations, users with differently-sized hands may access the button 202, which in some embodiments may be used to activate a camera or other imaging component of the mountable apparatus.

**.** Still referring to FIGS. 2A-F, and particularly to FIS. 2E and 2F, In some embodiments, the wearable apparatus 300 may include a strap 304. In some embodiments, the strap 304 may be hooked through a loop 312 and configured to be attached to a user's arm, wrist, hand, or other body part as needed. In some embodiments, the strap 304 may be connected via a hook-and-loop system (e.g., Velcro) or similar fastening device.

**.** In some embodiments, a cord holder 313 may be attached to the strap 304 and configured to hold and/or loop around one or more cords or cables related to the wearable system 100. For example, in some embodiments, one or more cords for the stylus 208 may loop through the cord holder 313.

**.** In some embodiments, the strap 304 may be operably engaged with the mounting plate 302. In some embodiments, the wearable apparatus 300 may include an intermediary portion 314 that may be connected to the strap 304 and the mounting plate 302 and serve to connect the two components of the wearable apparatus 300. In some embodiments, the intermediary portion 314 may be composed of multiple layers 314A, 314B, as shown in at least FIG. 6. In some embodiments, a gap may be disposed between the layers of the intermediary portion 314.

**.** Referring now to FIG. 6, in some embodiments, a connecting axis 316. In some embodiments, the connecting axis 316 be disposed through the center region of the mounting plate 302. An additional view is shown in at least FIG. 2C. In some embodiments, the connecting axis 316 may be attached to the strap 304, disposed through the intermediary portion 314, and slotted into the mounting plate 302. In some embodiments, the connecting axis 316 may be two pieces 316A and 316B, which may be attached together to lock the wearable apparatus 300 and the mounting plate 200. In some embodiments, the connecting axis 316 may be connected to the strap 304 and/or the mounting plate 302 via one or more fasteners (e.g., screws). In some embodiments, the connecting axis 316 may be connected via magnets or other connecting elements. In some embodiments, the connecting axis 316 may be configured to rotate relative to one or more of the strap 304 or the mounting plate 302 and in at least this way a user may rotate the mountable device 200. In some embodiments, the connecting axis 316 may include a locking component configured to unlock the connecting axis 316 such that it may rotate and further configured to lock the connecting axis 316 such that it may not rotate. This rotation is shown in at least FIG. 4. In some embodiments, and as shown in FIG. 4, the wearable system 100 may be rotatable via the connecting axis 316, or other means in some embodiments. For example, in some embodiments, the wearable system 100 may be rotated from a "landscape" orientation substantially perpendicular to the palm of a user's hand, or to a "portrait" orientation substantially parallel to the palm of a user's hand. In some embodiments, the mountable device 200 may be rotated up to 360 degrees.

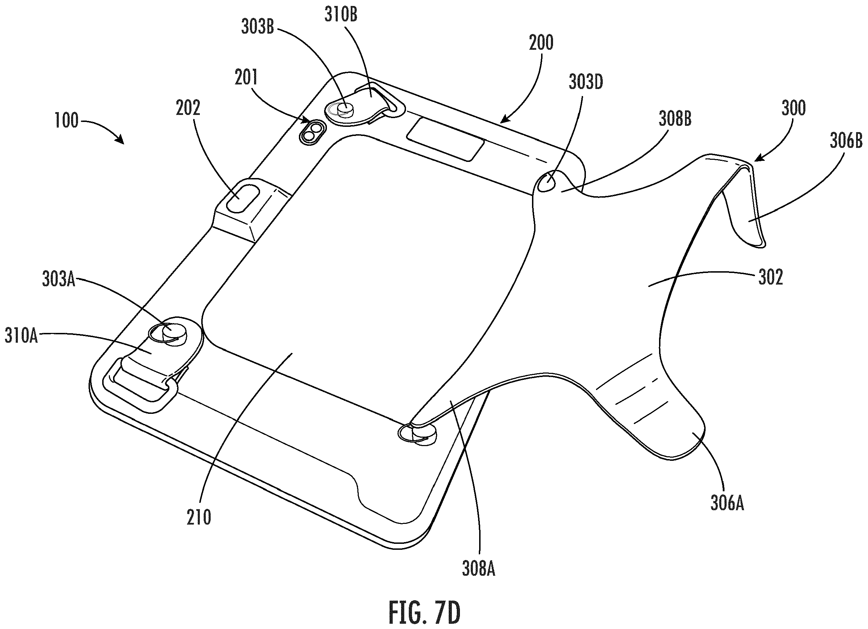

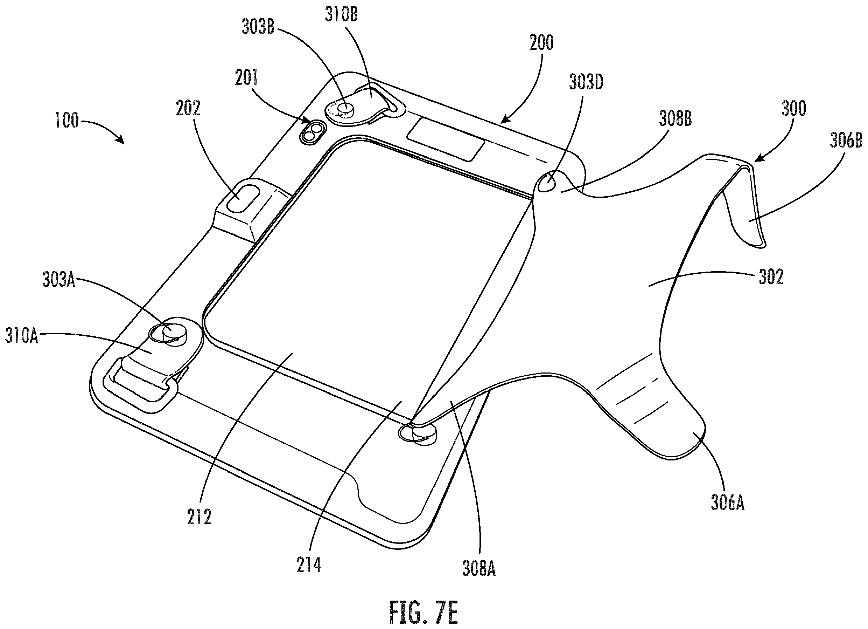

**.** Referring now to FIGS. 7A-F, in some embodiments, the mountable device 200 may include a back cover 210. In some embodiments, the back cover 210 may cover and/or protect a battery cover 212 of the mountable device 200 and a battery 214 of the mountable device 200. In some embodiments, a user may access the battery cover 212 or change the battery 214 of the mountable device 200 without removing entirely the wearable apparatus 300. As shown in FIGS. 7A-C, a user may unclasp the first attachment portion 306A from the adjustment device 310A. As shown in FIG. 7D, a user may do the same unclasping for the second attachment portion 306B with the adjustment device 310B. Further, in some embodiments, a user may unfasten two or more of the fastening devices 303A and 303B. As shown in FIG. 7D, in some embodiments, the mounting plate 302 may then be pulled back such that a user may access the cover 210 of the mountable device 200. As shown in FIG. 7E, in some embodiments, a user may then access the battery case 212, and, as shown in FIG. 7E, the battery case 212 may be removed so that a user may access and/or change the battery 214. In at least this way, as shown in FIGS. 7A-F, a user may change the battery or otherwise perform maintenance on the mountable device's battery without needing to fully remove the wearable apparatus 300 from the mountable device 200.

### Example Methods of Use

**.** FIG. 8 shows an example flow diagram illustrating an example method 400 of use for an example wearable system. In some embodiments, the example method 400 may be performed in reference to the apparatuses, systems, and devices previously described in this disclosure. However, it will be understood that the method 400 may be performed with any suitable system as desired. It will further be understood that the steps of the method 400 may be performed simultaneously or in sequence, as desired.

**.** In some embodiments, the method 400 may include a step 402 of attaching, via one or more fastening devices, a mounting plate to a mountable device. In some embodiments, the method 400 may include a step 404 of attaching, via a central axis, a strap to the mounting plate. In some embodiments, the method 400 may include a step 406 of rotating, via the central connecting axis, the strap relative to the mounting plate or the mounting plate relative to the strap.

**.** Many modifications and other embodiments of the disclosure set forth herein will come to mind to one skilled in the art to which this disclosure pertains having the benefit of the teachings presented in the foregoing descriptions and the associated drawings. Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A wearable apparatus comprising:
a mounting plate configured to be operably engaged with a mountable device;
a strap operably attached to the mounting plate and configured to be operably engaged with a user; and
a connecting axis configured to operably engage the mounting plate and the strap,
wherein the connecting axis is configured to rotate relative to one of the mounting plate or the strap while refraining from rotating relative to the other of the mounting plate or the strap.

2. The wearable apparatus of claim 1, wherein the mounting plate defines one or more first attachment portions and one or more second attachment portions, and wherein the mounting plate is configured to operably engage with the mountable device such that the first attachment portions are disposed on an upper portion of the mountable device and the second attachment portions are disposed on a bottom portion of the mountable device.

3. The wearable apparatus of claim 2, further comprising one or more adjustment devices configured to adjust a length of one or more of the first attachment portions of the second attachment portions when the mounting plate is operably engaged with the mountable device.

4. The wearable apparatus of claim 1, further comprising the mountable device, wherein the mountable device comprises a button configured to actuate one or more functions of the mountable device.

5. The wearable apparatus of claim 4, wherein the mountable device is a tablet.

6. The wearable apparatus of claim 1, wherein the connecting axis comprises a magnetized connecting axis configured to attach via magnetism to one or more of the strap or the mounting plate.

7. The wearable apparatus of claim 1, further comprising an intermediary portion operably connected to the mounting plate or the strap and configured to be disposed between the mounting plate and the strap.

8. The wearable apparatus of claim 7, wherein the intermediary portion comprises two or more layers, and wherein the connecting axis is configured to be disposed through one or more holes in the two or more layers of the intermediary portion.

9. The wearable apparatus of claim 7, further comprising a holder disposed on the strap and configured to hold a stylus.

10. The wearable apparatus of claim 1 wherein the mountable device comprises one or more mounting portions, and wherein the mounting plate is configured to be operably engaged with the mountable device at the one or more mounting portions.

11. The wearable system of claim 10, further comprising a sleeve configured to encase at least a portion of the mountable device.
